# EUROPEAN PATENT APPLICATION

(11) **EP 3 654 424 A1**
(43) Date of publication of application: **20.05.2020**
(21) Application number: 18832768.8
(22) Date of filing: 10.07.2018
(51) Int. Cl.: H01M 4/139, H01G 11/24, H01G 11/86, H01M 4/13, H01M 4/66

(54) **METHOD FOR PRODUCING MEMBER FOR ELECTROCHEMICAL ELEMENTS AND LAMINATE FOR ELECTROCHEMICAL ELEMENTS**

(30) Priority: 12.07.2017 JP 2017136244
(71) Applicant: Zeon Corporation, Tokyo 100-8246 (JP)
(72) Inventor: MATSUMURA, Taku, Tokyo 100-8246 (JP)
(74) Representative: Ehlich, Eva Susanne
(86) International application number: PCT/JP2018/026083
(87) International publication number: WO 2019/013218

(57) **Abstract**

A production method includes: an adhering step of positioning a substrate for an electrochemical device that includes a conductive adhesive layer and a laminate for an electrochemical device that includes an electrode mixed material layer and a support such that a surface of the conductive adhesive layer and a surface of the electrode mixed material layer are adjacent to one another, and adhering part of the electrode mixed material layer to the conductive adhesive layer to obtain a preliminary component; and a peeling step of peeling the support, etc., from the preliminary component. The conductive adhesive layer has a smaller surface area than the electrode mixed material layer, and at least part of a peripheral section of the electrode mixed material layer is not adhered to the conductive adhesive layer and accompanies the support side in the peeling step.

## Description

### TECHNICAL FIELD

The present disclosure relates to a method of producing a component for an electrochemical device and to a laminate for an electrochemical device. In particular, the present disclosure relates to a method of producing a component for an electrochemical device and to a laminate for an electrochemical device that can suitably be used in this production method.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

An electrode for a lithium ion secondary battery, for example, generally includes a current collector and an electrode mixed material layer (positive electrode mixed material layer or negative electrode mixed material layer) disposed on the current collector. Electrodes have conventionally been formed by various formation methods. For example, a method in which a slurry composition containing an electrode active material, a binder, a conductive material, and so forth is applied onto a current collector has generally been adopted in order to provide an electrode mixed material layer on an electrode. Another method that has been proposed for producing an electrode is a method in which an electrode mixed material layer is formed on a support other than a current collector so as to obtain an electrode mixed material layer-equipped support, and then this electrode mixed material layer-equipped support is used to "transfer" the electrode mixed material layer to a laminate that includes a current collector (for example, refer to Patent Literature (PTL) 1).

In PTL 1, composite particles that are a granulated product obtained through mixing and granulation of an electrode active material, a binder, a conductive material, and so forth are first used to form an electrode mixed material layer on a support so as to obtain an electrode mixed material layer-equipped support that includes the electrode mixed material layer. The electrode mixed material layer-equipped support that is obtained in PTL 1 is then used to perform electrode mixed material layer transfer to a laminate that includes a current collector, and thereby produce an electrode.

### CITATION LIST

### Patent Literature

PTL 1: JP 2010-97830 A

### SUMMARY

### (Technical Problem)

However, an electrode mixed material layer obtained through sheet-forming of a granulated product such as described above tends to have inadequate strength at a surface direction peripheral edge of the electrode mixed material layer and in proximity thereto (hereinafter, also referred to collectively as a "peripheral section"). As a consequence, an electrode or other component for an electrochemical device that includes this electrode mixed material layer may have inadequate edge strength.

Accordingly, an objective of the present disclosure is to provide a method of producing a component for an electrochemical device that can provide a component for an electrochemical device having high strength at edges thereof.

Another objective of the present disclosure is to provide a laminate for an electrochemical device that is suitable for this method of producing a component for an electrochemical device.

### (Solution to Problem)

The inventor conducted diligent investigation to achieve the objectives set forth above. The inventor discovered that the edge strength of an electrode mixed material layer included in a component for an electrochemical device, such as an electrode, can be significantly improved by, in a transferring step in which an electrode mixed material layer-equipped support is used, performing transfer in a manner such that at least part of a peripheral section of the electrode mixed material layer remains on the support, rather than transferring the entire electrode mixed material layer, and in this manner completed the present disclosure.

Specifically, the present disclosure aims to advantageously solve the problem set forth above by disclosing a method of producing a component for an electrochemical device using a laminate for an electrochemical device that includes an electrode mixed material layer and a support, comprising: an adhering step of positioning a substrate for an electrochemical device that includes a conductive adhesive layer at a surface thereof and the laminate for an electrochemical device such that a surface of the conductive adhesive layer and a surface of the electrode mixed material layer are adjacent to one another, and adhering part of the electrode mixed material layer to the conductive adhesive layer to obtain a preliminary component; and a peeling step of peeling, from the preliminary component, the support and another part of the electrode mixed material layer that is a part that is not adhered to the conductive adhesive layer, wherein the conductive adhesive layer has a smaller surface area than the electrode mixed material layer, and at least part of a peripheral section of the electrode mixed material layer is the other part of the electrode mixed layer that is not adhered to the conductive adhesive layer. By adopting a procedure that causes at least part of the peripheral section of the electrode mixed material layer to remain on the support during electrode mixed material layer transfer as set forth above (hereinafter, also referred to as a "production method accompanied by partial electrode mixed material layer transfer" or a "partial transfer method"), it is possible to provide a component for an electrochemical device having high strength at edges thereof.

Moreover, the present disclosure aims to advantageously solve the problem set forth above by disclosing a laminate for an electrochemical device comprising a functional layer and an electrode mixed material layer, in stated order, on a surface of a support. When a laminate for an electrochemical device includes a functional layer between a support and an electrode mixed material layer as set forth above, this enables formation of a good electrode mixed material layer when a transfer operation is implemented using this laminate for an electrochemical device.

In the presently disclosed laminate for an electrochemical device, the functional layer preferably has a thickness of not less than 1.5 µm and not more than 3 µm. When the thickness of the functional layer included in the laminate for an electrochemical device is within the range set forth above, this enables good holding of the electrode mixed material layer and can improve electrical characteristics of an obtained electrochemical device.

In the presently disclosed laminate for an electrochemical device, the functional layer preferably contains non-conductive particles. When the functional layer contains non-conductive particles, the functional layer can function to protect an electrode mixed material layer in an electrochemical device and can improve electrochemical characteristics of the electrochemical device.

In the presently disclosed laminate for an electrochemical device, it is preferable that the functional layer contains organic particles A and that the organic particles A have a glass-transition temperature of 20°C or higher. The inclusion of organic particles A having a glass-transition temperature of 20°C or higher in the functional layer can further improve ease of transfer of the laminate for an electrochemical device. Note that the "glass-transition temperature" of organic particles A referred to in the present disclosure can be measured by a measurement method described in the EXAMPLES section of the present specification.

In the presently disclosed laminate for an electrochemical device, it is preferable that the electrode mixed material layer contains organic particles B and that the organic particles B have a glass-transition temperature of 30°C or lower.

The inclusion of organic particles B having a glass-transition temperature of 30°C or lower in the electrode mixed material layer can increase the strength of the electrode mixed material layer and improve electrical characteristics of an obtained electrochemical device. Note that the "glass-transition temperature" of organic particles B referred to in the present disclosure can be measured by a measurement method described in the EXAMPLES section of the present specification.

In the presently disclosed method of producing a component for an electrochemical device, the laminate for an electrochemical device is preferably any one of the laminates for an electrochemical device set forth above.

The use of any one of the laminates for an electrochemical device set forth above in the presently disclosed method of producing a component for an electrochemical device enables good production of an electrochemical device having excellent electrical characteristics.

In the presently disclosed method of producing a component for an electrochemical device, a rate of change of density of the electrode mixed material layer when comparing before the adhering step and after the adhering step is preferably not less than 5% and not more than 20%.

When the rate of change of density of the electrode mixed material layer between before and after transfer is not less than 5% and not more than 20%, the ease of transfer can be increased while enabling good positioning of the electrode mixed material layer on a laminate by transfer.

The "rate of change of density of an electrode mixed material layer between before and after transfer" referred to in the present disclosure can be calculated by a method described in the EXAMPLES section of the present specification.

### (Advantageous Effect)

According to the present disclosure, it is possible to provide a method of producing a component for an electrochemical device that can provide a component for an electrochemical device having high strength at edges thereof.

Moreover, according to the present disclosure, it is possible to provide a laminate for an electrochemical device that is suitable for this method of producing a component for an electrochemical device.

### DETAILED DESCRIPTION

The following provides a detailed description of embodiments of the present disclosure.

The presently disclosed method of producing a component for an electrochemical device can suitably be implemented without any specific limitations in production of an electrode of an electrochemical device such as a lithium ion secondary battery or an electric double-layer capacitor. Moreover, the presently disclosed laminate for an electrochemical device can suitably be used in any method of producing a component for an electrochemical device without any specific limitations other than that the method includes an operation of forming an electrode mixed material layer through transfer. In particular, the presently disclosed laminate for an electrochemical device can suitably be used in the presently disclosed method of producing a component for an electrochemical device.

The following provides a detailed description of the present disclosure using a case in which the electrochemical device is a lithium ion secondary battery as an example.

The presently disclosed method of producing a component for an electrochemical device (hereinafter, also referred to simply as the "presently disclosed production method") is a method of producing a component for an electrochemical device using a laminate for an electrochemical device that includes an electrode mixed material layer and a support. More specifically, the presently disclosed production method includes an adhering step of positioning a substrate for an electrochemical device that includes a conductive adhesive layer at a surface thereof and the laminate for an electrochemical device such that a surface of the conductive adhesive layer and a surface of the electrode mixed material layer are adjacent to one another, and adhering part of the electrode mixed material layer to the conductive adhesive layer to obtain a preliminary component, and a peeling step of peeling, from the preliminary component, the support and another part of the electrode mixed material layer that is a part that is not adhered to the conductive adhesive layer. In the presently disclosed production method, it is a requirement that the conductive adhesive layer has a smaller surface area than the electrode mixed material layer, and that at least part of a peripheral section of the electrode mixed material layer is the other part of the electrode mixed material layer that is not adhered to the conductive adhesive layer. In electrode mixed material layer transfer, by adopting a production method accompanied by transfer of part of an electrode mixed material layer as set forth above (partial transfer method), rather than the whole electrode mixed material layer, the inclusion of a peripheral section of the electrode mixed material layer, which may have thin layer thickness and inadequate strength, can be avoided in an obtained component for an electrochemical device, and a component for an electrochemical device having high strength at edges thereof can be provided. The presently disclosed production method may optionally include a preparation step at an earlier stage than the adhering step. The following describes each step in detail.

### (Preparation step)

In the preparation step, a laminate for an electrochemical device and a substrate for an electrochemical device that includes a conductive adhesive layer are prepared. One example of a laminate for an electrochemical device that may be prepared in the preparation step is the presently disclosed laminate for an electrochemical device. The following describes the presently disclosed laminate for an electrochemical device.

### <Laminate for electrochemical device>

The presently disclosed laminate for an electrochemical device is a laminate that includes a functional layer and an electrode mixed material layer, in stated order, on a surface of a support and that is for use in production of an electrochemical device. Note that the support and the functional layer may be adjacent to one another without another layer or the like interposed between the support and the functional layer. Moreover, the functional layer and the electrode mixed material layer may be adjacent to one another without another layer or the like interposed between the functional layer and the electrode mixed material layer. As a result of the presently disclosed laminate for an electrochemical device including the functional layer between the support and the electrode mixed material layer, a good electrode mixed material layer can be formed when the subsequently described adhering step and peeling step (hereinafter, these steps are also referred to collectively as a "transferring step") are implemented using the laminate for an electrochemical device.

### [Support]

The support may, without any specific limitations, be a foil, film, or the like made from any material such as an inorganic material or an organic material. Specific examples include aluminum foil, copper foil, ionomer film (IO film), polyethylene film (PE film), polyethylene terephthalate film (PET film), polyethylene naphthalate film (PEN film), polyvinyl chloride film (PVC film), polyvinylidene chloride film (PVDC film), polyvinyl alcohol film (PVA film), polypropylene film (PP film), polyester film, polycarbonate film (PC film), polystyrene film (PS film), polyacrylonitrile film (PAN film), ethylene-vinyl acetate copolymer film (EVA film), ethylene-vinyl alcohol copolymer film (EVOH film), ethylene-methacrylic acid copolymer film (EMAA film), nylon film (NY film, polyamide (PA) film), cellophane, imide film, and paper. Moreover, a multilayer structure film including a foil, film, or the like of the any of the preceding examples may be used as the support. The multilayer structure may be obtained through stacking of a plurality of layers of films or the like of the same type or different types. Of these examples, a thermoplastic resin film is preferable, and, in particular, a PET film, PE film, PVC film, or the like is preferable as the support from a viewpoint of versatility and ease of handling.

The thickness of the support is not specifically limited but is preferably 5 µm or more, and more preferably 20 µm or more, and is preferably 200 µm or less, and more preferably 150 µm or less. Also, the width of the support is not specifically limited but is preferably 100 mm or more, and more preferably 200 mm or more, and is preferably 1,000 mm or less, and more preferably 500 mm or less.

One or more surfaces of the support may be subjected to release treatment. The method of release treatment may, for example, be a method in which a silicone resin, a fluororesin, a thermosetting resin such as an alkyd resin, or the like is applied onto the surface of the support to form a coating film, and then the obtained coating film is cured as necessary, but is not specifically limited to this method.

Note that the support can be used repeatedly and that repeated use thereof can further reduce the production cost of a component for an electrochemical device.

### [Functional layer]

The functional layer is disposed on the surface of the support. The functional layer may be what is referred to as a "transfer release layer" that adheres the electrode mixed material layer to the support and that during electrode mixed material layer transfer using the presently disclosed laminate for an electrochemical device, also functions to enable peeling of the electrode mixed material layer from the support. After this peeling, the functional layer may remain on the electrode mixed material layer and/or on the support. In a case in which an electrode is formed through electrode mixed material layer transfer, for example, functional layer remaining on the electrode mixed material layer is non-conductive and can function as an adhesive layer for adhering the electrode to a separator and/or as a porous membrane layer for improving heat resistance and strength of a separator.

The functional layer may contain organic particles A, a binder for a functional layer, non-conductive particles, and other optional components. The following describes each component in detail.

### -Organic particles A-

The functional layer preferably contains organic particles A having a glass-transition temperature of 20°C or higher. The organic particles A can function to facilitate peeling of the electrode mixed material layer from the support during electrode mixed material layer transfer using the laminate for an electrochemical device. Moreover, organic particles A in a functional layer remaining on the electrode mixed material layer after transfer can function to adhere a separator to an electrode. The glass-transition temperature of the organic particles A is preferably 30°C or higher, more preferably 35°C or higher, and even more preferably 40°C or higher, and is preferably 150°C or lower. When the glass-transition temperature of the organic particles A is not lower than any of the lower limits set forth above, the ease of transfer during electrode mixed material layer transfer using the laminate for an electrochemical device can be improved. Moreover, when the glass-transition temperature of the organic particles A is not higher than the upper limit set forth above, it is possible to increase the adhesive force that can be displayed when an electrode mixed material layer having the functional layer at the surface is adhered to a separator after transfer. This can reduce internal resistance of an electrochemical device and improve cycle characteristics of the electrochemical device.

The organic particles A may be any organic particles that can be used in an electrochemical device without any specific limitations other than being organic particles that have a glass-transition temperature of 20°C or higher. For example, the organic particles A may be organic particles having a core-shell structure including a core portion and a shell portion that at least partially covers the outer surface of the core portion. Note that the shell portion of the organic particles A having a core-shell structure covers the outer surface of the core portion but does not cover the entire outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, an organic particle that, for example, includes a shell portion having fine pores that pass from the outer surface of the shell portion (i.e., a circumferential surface of the organic particle A) to the outer surface of the core portion is also considered to be within the scope of the organic particles A described above.

In a case in which the organic particles A are organic particles having a core-shell structure, it is preferable that at least a polymer forming the shell portion has a glass-transition temperature of 20°C or higher, and more preferable that a polymer forming the core portion also has a glass-transition temperature of 20°C or higher. Moreover, the glass-transition temperature Tg^{s} of the polymer forming the shell portion is preferably at least 10°C higher than the glass-transition temperature Tg^{c} of the polymer forming the core portion, and more preferably at least 30°C higher than the glass-transition temperature Tg^{c} of the polymer forming the core portion. In a case in which the organic particles A are organic particles having a core-shell structure, the glass-transition temperature of the polymer forming the core portion is preferably 20°C or higher, more preferably 35°C or higher, and even more preferably 40°C or higher, and is preferably 70°C or lower, and more preferably 55°C or lower. The glass-transition temperature of the polymer forming the shell portion is preferably 50°C or higher.

The glass-transition temperature of the polymer forming the core portion or the polymer forming the shell portion can be adjusted by, for example, selecting the type and amount of each monomer used in preparation of the polymer as appropriate in consideration of the glass-transition temperature of a homopolymer of the monomer. For example, in the case of a polymer prepared using a (meth)acrylic acid ester monomer, the glass-transition temperature of the resultant polymer tends to decrease with increasing carbon number of an alcohol-derived part of the (meth)acrylic acid ester monomer. In the present disclosure, "(meth)acryl" is used to indicate "acryl" and/or "methacryl".

### --Chemical composition of core polymer

One or more monomers used to prepare the core polymer can be selected as appropriate such that the glass-transition temperature of the polymer satisfies the previously described conditions. Examples of such monomers include vinyl chloride monomers such as vinyl chloride and vinylidene chloride; vinyl acetate monomers such as vinyl acetate; aromatic vinyl monomers such as styrene, α-methylstyrene, styrene sulfonic acid, butoxystyrene, and vinylnaphthalene; vinylamine monomers such as vinylamine; vinylamide monomers such as N-vinylformamide and N-vinylacetamide; (meth)acrylic acid ester monomers such as methyl acrylate, ethyl acrylate, butyl acrylate, methyl methacrylate, ethyl methacrylate, and 2-ethylhexyl acrylate; (meth)acrylamide monomers such as acrylamide and methacrylamide; (meth)acrylonitrile monomers such as acrylonitrile and methacrylonitrile; fluorine-containing (meth)acrylate monomers such as 2-(perfluorohexyl)ethyl methacrylate and 2-(perfluorobutyl)ethyl acrylate; maleimide; maleimide derivatives such as phenylmaleimide; and diene monomers such as 1,3-butadiene and isoprene. One of these monomers may be used individually, or two or more of these monomers may be used in combination in a freely selected ratio.

Note that in the present disclosure, "(meth)acrylate" is used to indicate "acrylate" and/or "methacrylate", and "(meth)acrylonitrile" is used to indicate "acrylonitrile" and/or "methacrylonitrile".

Of these monomers, (meth)acrylic acid ester monomers and aromatic vinyl monomers are preferable as monomers used in preparation of the core polymer. In particular, the use of methyl methacrylate and/or butyl acrylate as a (meth)acrylic acid ester monomer is more preferable. The use of these monomers can facilitate control of the glass-transition temperature of the core polymer and can further increase ion diffusivity of the functional layer containing the organic particles A. Moreover, of aromatic vinyl monomers, styrene and styrene derivatives such as styrene sulfonic acid are more preferable. The use of an aromatic vinyl monomer can provide the functional layer with an appropriate degree of adhesiveness.

Also, the core polymer may include an acid group-containing monomer unit. Examples of acid group-containing monomers include monomers having an acid group such as carboxy group-containing monomers (for example, (meth)acrylic acid), sulfo group-containing monomers, phosphate group-containing monomers, and hydroxy group-containing monomers.

The core polymer preferably includes a cross-linkable monomer unit in addition to the monomer units described above. A cross-linkable monomer is a monomer that can form a cross-linked structure during or after polymerization by heating or irradiation with energy rays. Examples of cross-linkable monomers include ethylene glycol dimethacrylate.

### --Chemical composition of shell polymer

One or more monomers used to prepare the shell polymer can be selected as appropriate such that the glass-transition temperature of the polymer satisfies the previously described conditions. Examples of such monomers include the same monomers as given as examples of monomers that can be used for preparation of the core polymer. One of such monomers may be used individually, or two or more of such monomers may be used in combination in a freely selected ratio.

Of these monomers, an aromatic vinyl monomer is preferable as a monomer used in preparation of the shell polymer. In other words, the shell polymer preferably includes an aromatic vinyl monomer unit. Moreover, of aromatic vinyl monomers, styrene and styrene derivatives such as styrene sulfonic acid are more preferable. The use of an aromatic vinyl monomer can provide the functional layer with an appropriate degree of adhesiveness.

Besides the aromatic vinyl monomer unit, the shell polymer may also include an acid group-containing monomer unit. Examples of acid group-containing monomers that can be used include the same monomers as given as examples of monomers that can be used for preparation of the core polymer, of which, (meth)acrylic acid is preferable.

Note that in a case in which the organic particles A are particles that do not have a core-shell structure, one or more monomers that allow the glass-transition temperature of the organic particles A to be within any of the ranges set forth above can, in preparation of the organic particles A, be selected as appropriate from the same monomers as given as examples of monomers that can be used for preparation of the core polymer.

### -Volume-average particle diameter D50 of organic particles A

The volume-average particle diameter D50 of the organic particles A, regardless of whether or not they are particles having a core-shell structure, is preferably 0.01 µm or more, more preferably 0.1 µm or more, and even more preferably 0.2 µm or more, and is preferably 10 µm or less, more preferably 5 µm or less, and even more preferably 1 µm or less. When the volume-average particle diameter D50 of the organic particles A is not less than the lower limit of any of the ranges set forth above, an increase in internal resistance of the functional layer can be suppressed, and low-temperature output characteristics of an electrochemical device can be improved. Moreover, when the volume-average particle diameter D50 of the organic particles A is not more than the upper limit of any of the ranges set forth above, high-temperature cycle characteristics of an electrochemical device can be improved.

The "volume-average particle diameter D50" of organic particles referred to in the present disclosure can be measured by a measurement method described in the EXAMPLES section of the present specification.

The fractional content of the organic particles A in the functional layer when the total mass of the functional layer is taken to be 100 mass% is normally 50 mass% or more, preferably 60 mass% or more, and more preferably 70 mass% or more, and is normally 97 mass% or less, and preferably 95 mass% or less.

### -Non-conductive particles-

The functional layer preferably contains non-conductive particles. In a case in which a functional layer containing non-conductive particles remains on the electrode mixed material layer after transfer, the functional layer can function as a porous membrane layer for protecting the electrode mixed material layer (i.e., for improving heat resistance and strength of a separator). Known non-conductive particles that can be used in an electrochemical device may be used without any specific limitations as non-conductive particles compounded in the functional layer.

Specifically, although both inorganic fine particles and organic fine particles can be used as the non-conductive particles, inorganic fine particles are preferable. The material of the non-conductive particles is preferably an electrochemically stable material that is present stably in the environment of use of an electrochemical device. Examples of materials of the non-conductive particles that are preferable from the viewpoints set forth above include particles of oxides such as aluminum oxide (alumina), hydrous aluminum oxide (boehmite), silicon oxide, magnesium oxide (magnesia), calcium oxide, titanium oxide (titania), BaTiO₃, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, and/or the like as necessary.

One of these types of non-conductive particles may be used individually, or two or more of these types of non-conductive particles may be used in combination. In a case in which the non-conductive particles are organic fine particles, organic fine particles that differ from the organic particles A and the binder for a functional layer described further below may be selected as the non-conductive particles. These organic fine particles may, for example, be organic fine particles having a glass-transition temperature of higher than 150°C.

The content of the non-conductive particles in the functional layer relative to 100 parts by mass of the previously described organic particles A is preferably 10 parts by mass or more, and is preferably 50 parts by mass or less, and more preferably 40 parts by mass or less. When the content of the non-conductive particles is not less than the lower limit set forth above, electrolyte solution can easily penetrate into the functional layer to increase electrolyte solution injectability, and low-temperature output characteristics of an electrochemical device can be improved. Moreover, when the content of the non-conductive particles is not more than any of the upper limits set forth above, adhesive force that can be displayed by the functional layer can be improved.

### -Binder for functional layer-

The binder for a functional layer is organic particles that differ from the organic particles A and that can function to hold the electrode mixed material layer on the support. The binder for a functional layer may be a known binder such as a thermoplastic elastomer. The thermoplastic elastomer is preferably a conjugated diene polymer or an acrylic polymer, and more preferably an acrylic polymer.

The term "conjugated diene polymer" refers to a polymer including a conjugated diene monomer unit. Specific examples of the conjugated diene polymer include polymers that include an aromatic vinyl monomer unit and an aliphatic conjugated diene monomer unit, such as styrene-butadiene copolymer (SBR), and acrylic rubber (NBR) (polymer including an acrylonitrile unit and a butadiene unit). The term "acrylic polymer" refers to a polymer including a (meth)acrylic acid ester monomer unit. Examples of (meth)acrylic acid ester monomers that can form the (meth)acrylic acid ester monomer unit include the same (meth)acrylic acid ester monomers as given as examples of monomers that can be used for preparation of the core polymer of the organic particles.

One of these binders for a functional layer may be used individually, or two or more of these binders for a functional layer may be used in combination. However, note that in a case in which a binder for a functional layer that is a combination of two or more polymers is used, the polymers used as the binder for a functional layer are polymers that differ from the previously described organic particles A.

It is more preferable that an acrylic polymer used as the binder for a functional layer includes a (meth)acrylonitrile monomer unit. This can increase the strength of the functional layer. Examples of (meth)acrylonitrile monomers that can form the (meth)acrylonitrile monomer unit include the same (meth)acrylonitrile monomers as given as examples of monomers that can be used for preparation of the core polymer of the organic particles A.

In an acrylic polymer used as the binder for a functional layer, the amount of a (meth)acrylonitrile monomer unit as a proportion relative to the total amount of the (meth)acrylonitrile monomer unit and a (meth)acrylic acid ester monomer unit is preferably 1 mass% or more, and more preferably 2 mass% or more, and is preferably 30 mass% or less, and more preferably 25 mass% or less. When this proportion is at least the lower limit of any of the ranges set forth above, the strength of the acrylic polymer used as the binder for a functional layer can be increased, and thus the strength of the functional layer in which the acrylic polymer is used can also be increased. Moreover, when this proportion is not more than the upper limit of any of the ranges set forth above, the acrylic polymer used as the binder for a functional layer swells to an appropriate degree in electrolyte solution, and thus reduction of ion conductivity of the functional layer and deterioration of low-temperature output characteristics of an electrochemical device can be inhibited.

The glass-transition temperature of the binder for a functional layer is normally lower than the glass-transition temperature of the organic particles A (lower than both the glass-transition temperature of the core polymer and the glass-transition temperature of the shell polymer in a case in which the organic particles A have a core-shell structure), is preferably -100°C or higher, more preferably -90°C or higher, and even more preferably -80°C or higher, and is preferably 0°C or lower, more preferably -5°C or lower, and even more preferably -10°C or lower. By setting the glass-transition temperature of the binder for a functional layer as not lower than the lower limit of any of the ranges set forth above, adhesiveness and strength of the binder for a functional layer can be increased. Moreover, by setting the glass-transition temperature of the binder for a functional layer as not higher than the upper limit of any of the ranges set forth above, flexibility of the functional layer can be increased. The glass-transition temperature of the binder for a functional layer can be adjusted by altering the chemical composition of monomers used for preparation of the polymer.

The content of the binder for a functional layer in the functional layer relative to 100 parts by mass of the previously described organic particles A is preferably 1 part by mass or more, more preferably 3 parts by mass or more, and even more preferably 5 parts by mass or more, and is preferably 30 parts by mass or less, more preferably 25 parts by mass or less, and even more preferably 20 parts by mass or less. When the content of the binder for a functional layer is set as not less than the lower limit of any of the ranges set forth above, binding capacity of the functional layer can be improved, which enables good holding of the electrode mixed material layer on the support at an earlier stage than the peeling step. Moreover, by setting the content of the binder for a functional layer as not more than the upper limit of any of the ranges set forth above, the ease of transfer during electrode mixed material layer transfer using the laminate for an electrochemical device can be improved.

Examples of methods by which the binder for a functional layer can be produced include solution polymerization, suspension polymerization, and emulsion polymerization. Of these methods, emulsion polymerization and suspension polymerization are preferable because polymerization can be carried out in water and a water dispersion containing the binder for a functional layer in a particulate form can suitably be used, as-produced, in formation of the functional layer. In production of a polymer used as the binder for a functional layer, it is preferable that the reaction system contains a dispersant. In general, the binder for a functional layer is substantially composed by the constituent polymer thereof but may also be accompanied by other optional components such as an additive used in polymerization.

### [Other components]

The functional layer may contain other optional components besides the components described above. Commonly known examples of such other components can be used without any specific limitations so long as electrochemical reactions in an electrochemical device are not affected. One of such other components may be used individually, or two or more of such other components may be used in combination.

Examples of these other components include known additives that can be used in functional layer formation such as wetting agents (for example, ethylene oxide-propylene oxide copolymer), viscosity modifiers, and additives for electrolyte solution.

### -Formation method of functional layer-

The functional layer can be formed by first preparing a composition for a functional layer (functional layer composition preparation step) and then applying the composition for a functional layer onto the surface of the support to obtain a coating film (application step). In the functional layer composition preparation step, the composition for a functional layer can, without any specific limitations, be prepared by dispersing the previously described components in any dispersion medium, such as water. Although the dispersing can be carried out by any method without any specific limitations, the dispersing is normally carried out by mixing using a disperser as a mixing device so as to efficiently disperse the components. The disperser is preferably a device that can homogeneously disperse and mix the components. Examples of dispersers that can be used include a ball mill, a sand mill, a pigment disperser, a grinding machine, an ultrasonic disperser, a homogenizer, and a planetary mixer. A high-level disperser such as a bead mill, a roll mill, or a FILMIX is preferably used from a viewpoint that such a disperser can impart a high level of dispersing shear.

No specific limitations are placed on the method by which the composition for a functional layer is applied onto the support in the application step. Examples of methods that can be used include spray coating, doctor blading, reverse roll coating, direct roll coating, gravure coating, extrusion coating, and brush coating. Of these methods, gravure coating and spray coating are preferable.

### -Thickness of functional layer-

The thickness of the functional layer is preferably 1.5 µm or more, and more preferably 1.8 µm or more, and is preferably 3.0 µm or less, and more preferably 2.2 µm or less. When the thickness of the functional layer is not less than any of the lower limits set forth above, adhesiveness between the support and the electrode mixed material layer can be increased. Moreover, when the thickness of the functional layer is not more than any of the upper limits set forth above, functional layer remaining on the electrode mixed material layer after transfer can be prevented from being excessively thick, and low-temperature output characteristics of an obtained electrochemical device can be improved.

### [Electrode mixed material layer]

The electrode mixed material layer is disposed on the surface of the functional layer. The electrode mixed material layer is formed using a composition for an electrode mixed material layer that contains an electrode active material. In addition to the electrode active material, the composition for an electrode mixed material layer preferably contains organic particles B that function to hold the electrode active material in the electrode mixed material layer. Moreover, the composition for an electrode mixed material layer may optionally contain a solvent, a known conductive substance such as any of those listed as conductive substances that can be contained in the subsequently described conductive adhesive layer, known additive such as a dispersant and a thickener, and so forth.

No specific limitations are placed on the electrode active material, and any of the typical electrode active materials described in JP 2011-77070 A and JP 2010-97830 A, such as graphite and lithium cobalt oxide, may be used.

Moreover, no specific limitations are placed on the organic particles B other than being able to function to hold the electrode active material in the electrode mixed material layer. Examples thereof include a conjugated diene polymer or acrylic polymer such as listed for the binder for a functional layer, a fluoropolymer, a polyimide polymer, a polyamide polymer, and a polyurethane polymer. Of these examples, polymers that include an aromatic vinyl monomer unit and an aliphatic conjugated diene monomer unit, such as styrene-butadiene copolymer (SBR), and fluoropolymers such as polyvinylidene fluoride are preferable as the organic particles B.

The glass-transition temperature of the organic particles B is preferably 30°C or lower, and more preferably 10°C or lower, and is normally -100°C or higher. Compounding of organic particles B having a glass-transition temperature that is not higher than any of the upper limits set forth above in the electrode mixed material layer can improve the strength of the electrode mixed material layer. The glass-transition temperature of the organic particles B can be adjusted by altering the chemical composition of monomers used to prepare the polymer. When the glass-transition temperature of the organic particles B is compared to the glass-transition temperature of the organic particles A that may be contained in the previously described functional layer, it is preferable that the glass-transition temperature of the organic particles B is lower than the glass-transition temperature of the organic particles A, and more preferable that the difference between these glass-transition temperatures is 20°C or more. Note that in a case in which the organic particles A are particles having a core-shell structure, the glass-transition temperature of the organic particles B is preferably lower than both the glass-transition temperature of the shell portion of the organic particles A and the glass-transition temperature of the core portion of the organic particles A.

The method by which the electrode mixed material layer is formed is not specifically limited and may, for example, be any of the three methods that are briefly described below.
(1) A method (application method) in which a composition for an electrode mixed material layer obtained by dispersing the electrode active material, organic particles B, and so forth in a solvent, such as water, is applied onto the functional layer to obtain a coating film, and then the obtained coating film is dried
(2) A method (composite particle sheet-forming method) in which a composition for an electrode mixed material layer obtained by dispersing the electrode active material, organic particles B, and so forth in a solvent, such as water, is granulated by removing the solvent in a liquid drop state by spraying or the like (granulation step), and then composite particles obtained as the granulated product are formed into a sheet-shaped electrode mixed material layer (sheet-forming step)
(3) A method (composition sheet-forming method) in which a composition for an electrode mixed material layer obtained through kneading of the electrode active material, organic particles B, and so forth is formed into a sheet shape, and then the resultant formed product is stacked on the support

Of these methods, formation method (2) is preferable in terms that a thick electrode can be formed without the need for a drying step. The description in JP 2010-97830 A can be referred to for more specific details about formation method (2). The sheet-forming step in formation method (2) can be implemented by extrusion molding, roll rolling, or pressure forming without any specific limitations. Of these methods, pressure forming is preferable because of the simplicity of equipment by which it can be performed. In particular, the adoption of powder pressure forming is more preferable. The powder pressure forming may, for example, be roll pressure forming in which the composite particles are supplied to a roll-type pressure forming machine by a feeding device such as a screw feeder and then an electrode mixed material layer is formed, a method in which the composite particles are spread onto the functional layer, the composite particles are then evened using a blade or the like to adjust the thickness, and subsequently forming is performed by a pressure application device, or a method in which the composite particles are loaded into a mold and then pressure is applied to the mold to perform forming.

### -Thickness of electrode mixed material layer-

The thickness of the electrode mixed material layer is preferably 50 µm or more, and more preferably 60 µm or more, and is preferably 2,000 µm or less, and more preferably 500 µm or less. The thickness of the electrode mixed material layer can be adjusted by, for example, adjusting the basis weight of composite particles in a case in which composite particles are used and/or by altering the pressing strength in a pressure application step in a case in which the formation method is accompanied by a pressure application step.

### <Substrate for electrochemical device>

A substrate for an electrochemical device including a conductive adhesive layer at the surface is prepared in addition to the laminate for an electrochemical device set forth above in the preparation step. The conductive adhesive layer may be disposed at an outermost surface of the substrate for an electrochemical device that includes the conductive adhesive layer. The conductive adhesive layer contains, for example, a conductive substance, a binder for a conductive adhesive layer, and optional additives.

### [Substrate]

No specific limitations are placed on the substrate included in the substrate for an electrochemical device including the conductive adhesive layer at the surface. The substrate may be any substrate known as an electrode substrate for an electrochemical device and may be selected as appropriate depending on the type of target electrochemical device. For example, a material having electrical conductivity and electrochemical durability may be used as a current collector. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio.

### [Conductive adhesive layer]

Examples of conductive substances that may be contained in the conductive adhesive layer include, but are not specifically limited to, graphite, carbon black, carbon fibers, carbon whiskers, carbon nanofibers, and carbon nanotubes. One of these conductive substances may be used individually, or two or more of these conductive substances may be used in combination in a freely selected ratio. Of these conductive substances, graphite and carbon black are preferable from a viewpoint of increasing the capacity of an obtained electrochemical device.

Moreover, the binder for a conductive adhesive layer contained in the conductive adhesive layer may, for example, be any of the same thermoplastic elastomers as the binder for a functional layer.

Furthermore, the conductive adhesive layer may contain optional additives such as a dispersant. Suitable examples of dispersants that can be used include, but are not specifically limited to, alkali metal salts of carboxymethyl cellulose.

The conductive adhesive layer can be formed through a conductive adhesive layer composition preparation step of compounding and mixing the various components, an application step with respect to the substrate for an electrochemical device, and an optional drying step. Note that the adhering step described below may be implemented without drying a coating film of the composition for a conductive adhesive layer.

-Thickness of conductive adhesive layer-

The thickness of the conductive adhesive layer is preferably 1.5 µm or more, and more preferably 1.9 µm or more, and is preferably 3.0 µm or less, and more preferably 2.2 µm or less. By setting the thickness of the conductive adhesive layer as not less than any of the lower limits set forth above, adhesive force of the conductive adhesive layer can be increased. Moreover, by setting the thickness of the conductive adhesive layer as not more than any of the upper limits set forth above, low-temperature output characteristics of an obtained electrochemical device can be improved. The thickness of the conductive adhesive layer is preferably greater than or equal to the thickness of the functional layer.

### -Relationship between surface area of conductive adhesive layer and surface area of electrode mixed material layer-

The surface area of the conductive adhesive layer is required to be smaller than the surface area of the electrode mixed material layer. By forming both of these layers in a manner such that they satisfy this relationship, it is possible to implement a "production method accompanied by partial electrode mixed material layer transfer (partial transfer method)" such as presently disclosed.

The term "surface area" as used in the present specification does not necessarily mean surface area requiring calculation that takes into account irregularities at the surface of each layer. Rather, the "surface area" of each layer referred to in the present specification is the area of a region that, in a situation in which a location where the surface of the conductive adhesive layer and the surface of the electrode mixed material layer come into contact is approximated as a theoretical contact plane that is a flat plane, is defined by a projected perimeter obtained by projecting the perimeter of the outermost surface of the layer onto the contact plane.

As a result of the conductive adhesive layer having a smaller surface area than the electrode mixed material layer, a peripheral section of the electrode mixed material layer does not adhere to the conductive adhesive layer and remains at the support side in the subsequently described peeling step. Therefore, it is possible to avoid the peripheral section of the electrode mixed material layer, which has inadequate strength, becoming included in an obtained component for an electrochemical device. Consequently, the edge strength of the obtained component for an electrochemical device can be increased. The surface area of the conductive adhesive layer is preferably more than 80% of the surface area of the electrode mixed material layer and less than 99% of the surface area of the electrode mixed material layer.

### (Adhering step)

In the adhering step, the substrate for an electrochemical device and the laminate for an electrochemical device are positioned such that the surface of the conductive adhesive layer and the surface of the electrode mixed material layer are adjacent to one another, and part of the electrode mixed material layer is adhered to the conductive adhesive layer to obtain a preliminary component. Pressing during this adhering can cause plastic deformation of at least the organic particles B contained in the electrode mixed material layer and can increase close adherence between the electrode mixed material layer and the conductive adhesive layer. Moreover, the electrode mixed material layer and the conductive adhesive layer may be adhered by hot pressing in which heat is imparted concurrently to pressing.

The hot pressing may, more specifically, be batch hot pressing, continuous hot roll pressing, or the like, with continuous hot roll pressing providing increased productivity being preferable. The hot pressing temperature is normally 50°C to 200°C, and preferably 70°C to 150°C, but is not specifically limited so long as it does not cause loss of the substrate. A hot pressing temperature that is within any of these ranges enables uniform pasting of the electrode mixed material layer and the conductive adhesive layer and can increase the strength of an obtained component for an electrochemical device.

The line pressure in hot pressing is normally 1.0 kN/m to 500 kN/m but is not specifically limited so long as it does not cause loss of the substrate. A hot pressing line pressure that is within this range enables uniform pasting of the electrode mixed material layer and the conductive adhesive layer.

The density of the electrode mixed material layer that has undergone the adhering step is preferably a density such that when compared to the density of the electrode mixed material layer at an earlier stage than the adhering step, the density change is not less than 5% and not more than 20%. In other words, the rate of change of density of the electrode mixed material layer between before and after transfer is preferably 5% or more, which means that the density of the electrode mixed material layer after transfer is preferably slightly higher than the density of the electrode mixed material layer before transfer. Therefore, in a case in which a laminate for an electrochemical device including an electrode mixed material layer formed using composite particles is used, for example, it is preferable to select a laminate for an electrochemical device that is formed without excessively raised pressure in a pressure application step during formation of the electrode mixed material layer. Moreover, the change of density between before and after transfer is preferably 20% or less, which means that the density of the electrode mixed material layer after transfer is preferably not excessively higher than the density of the electrode mixed material layer before transfer. Therefore, in a case in which a laminate for an electrochemical device including an electrode mixed material layer formed using composite particles is used, for example, it is preferable to select a laminate for an electrochemical device that is formed with application of suitably high pressure in a pressure application step during formation of the electrode mixed material layer. Moreover, it is preferable that an appropriate pressure is applied during transfer (i.e., during the adhering step), for example. By limiting the change of density between before and after transfer to 20% or less, change occurring in the electrode mixed material layer during transfer can be inhibited from becoming excessively large, and the occurrence of electrode collapse can be inhibited. For these reasons, when the change of density of the electrode mixed material layer between before and after transfer is not less than 5% and not more than 20%, the ease of transfer can be increased while enabling good positioning of the electrode mixed material layer on a laminate by transfer. Note that the value of the change of density is the proportion constituted by the increase in density of the electrode mixed material layer at a later stage than the adhering step when the density of the electrode mixed material layer at an earlier stage than the adhering step is taken to be 100%. More specifically, the value of the change of density can be calculated by a method described further below in the EXAMPLES section.

As described above, the value of the change of density can be adjusted by, for example, altering the chemical composition in formation of the electrode mixed material layer in the preparation step, the pressing strength in a pressure application operation when such an operation is performed in formation of the electrode mixed material layer, the pressing strength in a pressing operation when such an operation is performed in the adhering step, and so forth.

### (Peeling step)

In the peeling step, the support and another part of the electrode mixed material layer that is a part that is not adhered to the conductive adhesive layer are peeled from the preliminary component to obtain a component for an electrochemical device. Specifically, when the total surface area of the electrode mixed material layer is taken to be 100 area%, the proportion of the electrode mixed material layer that is peeled is not less than 1 area% and not more than 20 area%. The support may be peeled from the preliminary component in the peeling step by winding the support using a known winding machine such as a winder, but is not specifically limited to being peeled in this manner. The specific means of partial peeling may, for example, include a scraper at an earlier stage than the winder so as to remove the other part of the electrode mixed material layer that is not adhered to the conductive adhesive layer and that remains on the support, and thereby facilitate reuse of the support. Also note that an operation of forming an incision or a groove in the electrode mixed material layer surface at a position corresponding to the perimeter of the conductive adhesive layer may be implemented at an earlier stage than the peeling step. The formation of an incision or a groove can facilitate peeling in the peeling step and can also provide the electrode mixed material layer on the obtained component for an electrochemical device with a better edge shape.

The component for an electrochemical device obtained through the peeling step may be incorporated into a product as an electrode of an electrochemical device.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In each example or comparative example, a lithium ion secondary battery was produced as one example of an electrochemical device. In particular, a negative electrode or positive electrode of a lithium ion secondary battery, as one example of a component for an electrochemical device, was produced in accordance with the presently disclosed laminate for an electrochemical device and the presently disclosed production method using this laminate.

In the examples and comparative example, the following methods were used to measure and evaluate the glass-transition temperature and volume-average particle diameter of organic particles A and B, the thickness of each layer, the change of density of an electrode mixed material layer, the high-temperature cycle characteristics and low-temperature output characteristics of an electrochemical device, and the edge strength of a component for an electrochemical device.

### <Glass-transition temperature of organic particles A and B>

For organic particles A, a water dispersion containing a polymer (core polymer and shell polymer) as a measurement sample was prepared under the same polymerization conditions as the polymerization conditions of the shell portion using the monomers, various additives, and so forth used in formation of the core portion and the shell portion. The prepared water dispersion was used as a measurement sample. A water dispersion containing organic particles B was also prepared as a measurement sample.

Next, a differential scanning calorimeter (EXSTAR DSC6220 produced by SII NanoTechnology Inc.) was used to measure a DSC curve by weighing 10 mg of dried measurement sample into an aluminum pan, using an empty aluminum pan as a reference, and performing measurement under normal temperature and humidity in a measurement temperature range of -100°C to 500°C and with a heating rate of 10°C/min. In the heating process, the glass-transition temperature was determined from an intersection point of a base line directly before a heat absorption peak on the DSC curve at which a differential signal (DDSC) reached 0.05 mW/min/mg or more and a tangent to the DSC curve at a first inflection point to appear after the heat absorption peak.

### <Measurement of volume-average particle diameter>

The volume-average particle diameter (volume distribution) was measured using a laser diffraction particle size distribution analyzer (LS 13 320 produced by Beckman Coulter Inc.). The volume-average particle diameter D50 was obtained from the measurement results. This result is shown in Table 1 as the volume-average particle diameter D50 (nm).

### <Thickness of each layer>

An electrode obtained by a production method in accordance with the present disclosure in each example or comparative example was punched out as 90 mm × 90 mm, and was then divided into 9 parts of 30 cm × 30 cm to obtain measurement specimens. Cross-sectional observation of each measurement specimen was performed by a tabletop microscope (TM3030Plus produced by Hitachi High-Technologies Corporation; × 1,000 magnification), 10 samples were measured, and the average of the measurements was taken to be the thickness of each layer.

### <Change of density of electrode mixed material layer>

After a preparation step in each example or comparative example, the initial density D1 of an electrode mixed material layer was measured at a point at an earlier stage than an adhering step. The post-transfer density D2 of the electrode mixed material layer was measured at a point at a later stage than a peeling step. In measurement of D1 and D2, samples of the same size as in measurement of the "Thickness of each layer" were taken at each point and the mass thereof was measured. A value obtained by subtracting the mass of other elements (inclusive of a substrate or support other than the electrode mixed material layer) was divided by the thickness of the electrode mixed material layer to calculate the density. A value for the rate of change of density (%) was calculated by an equation: (D2 - D1)/D1 × 100.

### <High-temperature cycle characteristics>

A lithium ion secondary battery produced as an electrochemical device in each example or comparative example was subjected to 200 charge/discharge cycles of charging to 4.3 V and discharging to 3.0 V by a 0.5C constant-current method in an atmosphere having a temperature of 45 °C. A charge/discharge capacity maintenance rate expressed by the ratio of electric capacity at the end of 200 cycles and electric capacity at the end of 5 cycles (= (electric capacity at end of 200 cycles/electric capacity at end of 5 cycles) × 100(%)) was calculated. These measurements were performed for 5 lithium ion secondary battery cells and the average value for the charge/discharge capacity maintenance rate of the cells was evaluated by the following standard as the charge/discharge capacity retention rate. A larger value indicates better high-temperature cycle characteristics.
A: Charge/discharge capacity retention rate of 95% or more
B: Charge/discharge capacity retention rate of not less than 90% and less than 95%
C: Charge/discharge capacity retention rate of less than 90%

### <Low-temperature output characteristics>

A lithium ion secondary battery produced as an electrochemical device in each example or comparative example was constant-current constant-voltage (CCCV) charged to 4.3 V in an atmosphere having a temperature of 25°C for cell preparation. The prepared cell was discharged to 3.0 V by 0.2C and 2C constant-current methods in an atmosphere having a temperature of 25°C, and the electric capacity at each discharge rate was determined. A discharge capacity maintenance rate expressed by the ratio of the electric capacities (= (electric capacity at 2C/electric capacity at 0.2C) × 100(%)) was calculated. These measurements were performed for 5 lithium ion secondary battery cells and the average value for the discharge capacity maintenance rate of the cells was evaluated by the following standard as a low-temperature output characteristic. A larger value indicates better low-temperature output characteristics.
A: 80% or more
B: Less than 80%

### <Edge strength of electrode mixed material layer>

A belt-shaped negative electrode was unwound from a negative electrode roll. A test specimen of 5.0 cm × 5.0 cm was cut out such that one side thereof included an edge along a longitudinal direction of the belt-shaped negative electrode. The test specimen having a "functional layer/negative electrode mixed material layer/conductive adhesive layer/current collector" structure was subjected to ultrasonic welding (actuator produced by Branson (Ultraweld L20E)) under conditions of an amplitude of 37.6 µm, a pressure of 40 psi, a time of 0.3 s, and a frequency of 20 kHz. The mass before ultrasonic welding was taken to be W0, the mass after ultrasonic welding was taken to be W1, and the rate of change (W1/W0) × 100(%) was evaluated. A smaller rate of change indicates higher edge strength. Note that in Example 6, a positive electrode roll that had been produced was cut to obtain a test specimen, and then a test and evaluation were performed in the same way as described. Moreover, in Comparative Example 1, a test and evaluation were performed in the same way with respect to a test specimen having a "negative electrode mixed material layer/conductive adhesive layer/current collector" structure that had been produced by the method described in Comparative Example 1.
A: 99% or more
B: Not less than 95% and less than 99%
C: Not less than 90% and less than 95%
D: Less than 90%

### (Example 1)

First, a negative electrode was produced as a component for an electrochemical device through steps from a preparation step up to a peeling step such as described below. In other words, in Example 1, a negative electrode was obtained in accordance with the presently disclosed production method accompanied by partial electrode mixed material layer transfer, and then a lithium ion secondary battery including this negative electrode was produced.

### <Preparation step>

### 1. Laminate for electrochemical device

### [Preparation step of composition for functional layer]

### -Preparation of organic particles A-

A 5 MPa pressure vessel equipped with a stirrer was charged with 30 parts of butyl acrylate and 12 parts of methyl methacrylate as (meth)acrylic acid ester monomers; 24.5 parts of styrene as an aromatic vinyl monomer; 2.8 parts of methacrylic acid as an acid group-containing monomer; 0.7 parts of ethylene glycol dimethacrylate as a cross-linkable monomer; 1 part of sodium dodecylbenzenesulfonate as an emulsifier; 150 parts of deionized water; and 0.5 parts of potassium persulfate as a polymerization initiator for core portion formation. These materials were sufficiently stirred and were then heated to 60°C to initiate polymerization. Polymerization was continued until the polymerization conversion rate reached 96% to yield a water dispersion containing a particulate polymer forming a core portion.

A mixture of 29.7 parts of styrene as an aromatic vinyl monomer and 0.3 parts of methacrylic acid as an acid group-containing monomer for shell portion formation was continuously added to the water dispersion, the temperature was raised to 70°C, and polymerization was continued. The reaction was terminated by cooling at the point at which the polymerization conversion rate reached 96% to prepare a water dispersion containing organic particles having a core-shell structure in which the outer surface of a core portion was partially covered by a shell portion.

The polymer forming the core portion of the obtained organic particles had a glass-transition temperature of 40°C, whereas the polymer forming the shell portion of the organic particles had a glass-transition temperature of 105°C. The volume-average particle diameter (D50) was 500 nm.

### -Preparation of binder for functional layer-

A reactor equipped with a stirrer was charged with 70 parts of deionized water, 0.15 parts of sodium lauryl sulfate (produced by Kao Corporation; product name: EMAL 2F) as an emulsifier, and 0.5 parts of ammonium persulfate. The gas phase of the reactor was purged with nitrogen gas, and the temperature was raised to 60°C.

Meanwhile, a monomer mixture was obtained in a separate vessel by mixing 50 parts of deionized water, 0.5 parts of sodium dodecylbenzenesulfonate as a dispersant, 94 parts of butyl acrylate as a (meth)acrylic acid ester monomer, 2 parts of acrylonitrile, 2 parts of methacrylic acid, 1 part of N-methylolacrylamide, and 1 part of acrylamide. The monomer mixture was continuously added into the reactor over 4 hours to perform polymerization. The reaction was carried out at 60°C during the addition. After completion of this addition, a further 3 hours of stirring was performed at 70°C to complete the reaction and prepare a water dispersion containing a particulate binder (acrylic polymer) for a functional layer.

The glass-transition temperature of the obtained binder for a functional layer was -40°C. Note that the glass-transition temperature of the binder for a functional layer was measured in the same manner as for organic particles B.

### - Mixing-

Mixing was performed of 20 parts of alumina filler (LS256 produced by Nippon Light Metal Co., Ltd.) as non-conductive particles, 100 parts in terms of solid content of the water dispersion containing the organic particles A described above, 15 parts in terms of solid content of the water dispersion containing the binder for a functional layer described above, and 1.9 parts in terms of solid content of ethylene oxide-propylene oxide copolymer (solid content concentration: 70 mass%; polymerization ratio: 5/5 (mass ratio)) as a wetting agent. Deionized water was added and mixed therewith to adjust the solid content concentration to 15 mass%.

### [Formation step of composite particles for negative electrode]

In formation of a negative electrode mixed material layer, composite particles were prepared. First, a composition for an electrode mixed material layer was prepared by loading 96 parts of graphite (average particle diameter: 15 µm) as a negative electrode active material, 2 parts of styrene-butadiene copolymer (BM-480B produced by ZEON CORPORATION; glass-transition temperature: -25°C) as organic particles B, and 2 parts of a sodium salt of carboxymethyl cellulose (CMC-Na) as a thickener into a Planetary Despa with 120 parts of water as a solvent, and performing uniform mixing thereof.

A spray dryer (OC-16 produced by Ohkawara Kakohki Co., Ltd.) was used to perform spray drying granulation from the composition for an electrode mixed material layer under conditions of a rotating disk atomizer (diameter: 65 mm) rotation speed of 25,000 rpm, hot-air drying at 150°C, and a particle collection outlet temperature of 90°C to obtain composite particles for a negative electrode having an average particle diameter (volume-average particle diameter D50) of 75 µm.

### [Laminate formation step]

Next, a gravure coater was used to apply the composition for a functional layer described above over the entire surface at one side of a polyethylene terephthalate (PET) film (thickness: 25 µm; width: 180 mm) serving as a support of a laminate for an electrochemical device so as to form a coating film of the composition for a functional layer. The thickness of the coating film was 2 µm.

Next, the composite particles for a negative electrode were supplied onto the coating film of the composition for a functional layer such as to have a basis weight of 10 mg/cm². Next, a roller squeegee was applied, leveling was performed, and then the composite particles for a negative electrode were pressed to form a negative electrode mixed material layer having a density of approximately 1.27 g/cm³. In this manner, a laminate for an electrochemical device was obtained in which a functional layer and a negative electrode mixed material layer were disposed in this order at one side of PET film.

### 2. Substrate for electrochemical device

### [Preparation step of composition for conductive adhesive]

A slurry (composition for conductive adhesive) having a solid content concentration of 30% was obtained by using a planetary mixer to perform mixing and dispersing of 80 parts of graphite (KS-6 produced by Timcal; volume-average particle diameter D50: 3.7 µm) and 20 parts of carbon black (Super-P produced by Timcal; volume-average particle diameter D50: 0.4 µm) as carbon particles; 4 parts of an ammonium salt of carboxymethyl cellulose (degree of etherification: 0.6; 1% aqueous solution viscosity: 30 mPa·s) as a dispersant; 8 parts of a water dispersion (solid content concentration: 40%) containing an acrylate polymer as a binder; and 261 parts of water as a solvent.

### [Formation step of substrate for electrochemical device including conductive adhesive layer]

The composition for a conductive adhesive described above was applied onto one side of electrolytic copper foil (thickness: 15 µm; width: 200 mm) serving as a substrate at a rate of 10 m/min and was then dried in a drying oven under conditions of a drying temperature of 100°C and a drying time of 1 minute to obtain a substrate equipped with a conductive adhesive layer having a thickness of 2 µm and a coating width of 160 mm (substrate for electrochemical device including conductive adhesive layer at surface).

### <Adhering step>

Next, a roll press (Press Cutting Rough Surface Hot Roll produced by Hirano Gikenkogyo Co., Ltd.) was used to perform hot pressing of the laminate for an electrochemical device and the conductive adhesive layer-equipped substrate so as to closely adhere the surface of the negative electrode mixed material layer of the laminate for an electrochemical device and the surface of the conductive adhesive layer of the conductive adhesive layer-equipped substrate, and thereby obtain a preliminary component. In the hot pressing, roll pressing was performed under conditions of a forming rate of 6 m/min, a roll temperature of 100°C, and a pressing line pressure of 1.7 kN/cm. Note that the width of the conductive adhesive layer was 160 mm, the width of the electrode mixed material layer on the laminate for an electrochemical device obtained by the previously described step was 180 mm, and thus in a given section in the length direction, the surface area of the conductive adhesive layer was smaller than the surface area of the electrode mixed material layer.

### <Peeling step>

Next, the support (PET film) of the laminate for an electrochemical device was peeled from the preliminary component to obtain a roll of a component for an electrochemical device (negative electrode roll) including a negative electrode mixed material layer of 60 µm in thickness and 160 mm in width. The density of the negative electrode mixed material layer was approximately 1.5 g/cm³. Note that a residue of approximately 10 mm was confirmed at both width direction edges of the peeled support (PET film) side. This residue included a peripheral section along a longitudinal direction of the negative electrode mixed material layer. A test specimen was obtained from the resultant negative electrode roll and edge strength of the electrode mixed material layer was evaluated by the previously described method. The results are shown in Table 1.

### Next, the negative electrode roll obtained as described above was used to produce a lithium ion secondary battery.

### <Production of slurry composition for positive electrode>

A slurry composition for a positive electrode was prepared by stirring 96 parts of lithium cobalt oxide having a layered structure (LiCoO₂; particle diameter: 12 µm) as a positive electrode active material, 2.0 parts of acetylene black (HS-100 produced by Denki Kagaku Kogyo Kabushiki Kaisha) as a conductive material, 2.0 parts in terms of solid content of an NMP solution (solid content concentration: 8.0%) of polyvinylidene fluoride (PVdF; KP Polymer #7200 produced by Kureha Corporation), and an appropriate amount of NMP in a planetary mixer.

### <Production of positive electrode for lithium ion secondary battery>

Aluminum foil of 20 µm in thickness was prepared as a current collector. The slurry composition for a positive electrode was applied onto the aluminum foil by a comma coater such as to having a coating weight of 20 mg/cm² after drying. The aluminum foil was conveyed inside a 60°C oven for 2 minutes and inside a 120°C oven for 2 minutes at a speed of 0.5 m/min to dry the slurry composition for a positive electrode and form a film on the aluminum foil. Next, a roll of the aluminum foil with the film formed thereon was vacuum dried for 2 hours at a temperature of 165 °C. Thereafter, cooling was performed slowly to a temperature of 25°C over 1 hour (cooling rate: 140°C/hr) to obtain a positive electrode web. The density of the positive electrode web prior to pressing was 2.42 g/cm³. The positive electrode web was rolled by roll pressing to produce a positive electrode including the aluminum foil and a positive electrode mixed material layer having a density of 3.7 g/cm³. The thickness of the positive electrode mixed material layer was 70 µm.

### <Production of lithium ion secondary battery>

The post-pressing positive electrode was cut out as 4.8 cm × 4.8 cm. A separator that had been cut out to 5.2 cm × 5.5 cm was positioned on the positive electrode mixed material layer of the cut-out positive electrode. The negative electrode roll produced as described above was cut out as 5.0 cm × 5.0 cm to obtain a negative electrode. The obtained negative electrode was positioned at the opposite side of the separator to the positive electrode such that the surface of the functional layer formed on the negative electrode mixed material layer faced toward the separator. The laminate was enclosed in an aluminum packing case serving as a battery case, and then electrolyte solution (solvent: ethylene carbonate (EC)/diethyl carbonate (DEC)/vinylene carbonate (VC) = 68.5/30/1.5 (volume ratio); electrolyte: LiPF₆ of 1 M in concentration) was injected such that no air remained. The aluminum packing case was closed by heat sealing at 150°C to seal an opening of the aluminum packing case. High-temperature cycle characteristics and low-temperature output characteristics of a lithium ion secondary battery obtained in this manner were evaluated by the previously described methods. The results are shown in Table 1.

### (Example 2)

The same steps and evaluations as in Example 1 were performed with the exception that inorganic particles (alumina) were not compounded in a functional layer as non-conductive particles in production of a negative electrode as a component for an electrochemical device. The results are shown in Table 1.

### (Example 3)

The same steps and evaluations as in Example 1 were performed with the exception that organic particles A prepared as described below were compounded in production of a negative electrode as a component for an electrochemical device. The results are shown in Table 1.

### <Preparation of organic particles A>

Organic particles A were prepared in the same way as in Example 1 with the exception that 21.35 parts of butyl acrylate as a (meth)acrylic acid ester monomer; 45.5 parts of styrene as an aromatic vinyl monomer; 2.8 parts of methacrylic acid as an acid group-containing monomer; and 0.35 parts of ethylene glycol dimethacrylate as a cross-linkable monomer were used for core portion formation. The core portion of the obtained organic particles A had a glass-transition temperature of 60°C, whereas the shell portion of the organic particles A had a glass-transition temperature of 105°C. The volume-average particle diameter (D50) was 500 nm.

### (Examples 4 and 5)

The same steps and evaluations as in Example 1 were performed with the exception that the thickness of a functional layer in production of a negative electrode as a component for an electrochemical device was changed as shown in Table 1. The results are shown in Table 1.

### (Example 6)

A positive electrode was produced as a component for an electrochemical device in accordance with the present disclosure. First, a positive electrode was produced as a component for an electrochemical device through steps from a preparation step up to a peeling step such as described below.

### <Preparation step>

### 1. Laminate for electrochemical device

### [Formation step of composite particles for positive electrode mixed material layer]

In formation of a positive electrode mixed material layer, composite particles were prepared. First, a composition for an electrode mixed material layer was prepared by loading 96 parts of lithium cobalt oxide having a layered structure (LiCoO₂; particle diameter: 12 µm) as a positive electrode active material, 2 parts of acetylene black (HS-100 produced by Denki Kagaku Kogyo Kabushiki Kaisha) as a conductive material, 2 parts of polyvinylidene fluoride (PVdF; KF Polymer #7200 produced by Kureha Corporation) as organic particles B, and an appropriate amount of NMP into a Planetary Despa and performing uniform mixing thereof.

A spray dryer (OC-16 produced by Ohkawara Kakohki Co., Ltd.) was used to perform spray drying granulation of the composition for an electrode mixed material layer under conditions of a rotating disk atomizer (diameter: 65 mm) rotation speed of 25,000 rpm, hot-air drying at 150°C, and a particle collection outlet temperature of 90°C to obtain composite particles for a positive electrode having an average particle diameter of 75 µm.

### [Laminate formation step]

Next, a gravure coater was used to apply a composition for a functional layer, which was prepared in the same way as in Example 1, at one side of a PET film (thickness: 25 µm; width: 180 mm) serving as a support of a laminate for an electrochemical device so as to form a coating film of the composition for a functional layer. The thickness of the coating film was 2 µm.

Next, the composite particles for a positive electrode were supplied onto the coating film of the composition for a functional layer such as to have a basis weight of 20 mg/cm². Next, a roller squeegee was applied, leveling was performed, and then the composite particles for a positive electrode were pressed to form a positive electrode mixed material layer having a density of approximately 3.15 g/cm³. In this manner, a laminate for an electrochemical device was obtained in which a functional layer and a positive electrode mixed material layer were disposed in this order at one side of PET film.

### 2. Substrate for electrochemical device

### [Formation step of substrate for electrochemical device including conductive adhesive layer]

A conductive adhesive layer-equipped substrate (substrate for electrochemical device including conductive adhesive layer at surface) was obtained in the same way as in Example 1 with the exception that aluminum foil (thickness: 20 µm; width: 200 mm) was used as a substrate.

### <Adhering step to peeling step>

The laminate for an electrochemical device and the conductive adhesive layer-equipped substrate obtained as described above were used to perform an adhering step and a peeling step in the same way as in Example 1 so as to obtain a roll of a component for an electrochemical device (positive electrode roll) including a positive electrode mixed material layer having a thickness of 60 µm and a width of 160 mm. The density of the positive electrode mixed material layer was approximately 3.7 g/cm³. Note that a residue of approximately 10 mm was confirmed at both width direction edges of the peeled support (PET film) side. This residue included a peripheral section of the positive electrode mixed material layer. A test specimen was obtained from the resultant positive electrode roll and edge strength of the electrode mixed material layer was evaluated by the previously described method. The results are shown in Table 1.

### Next, the positive electrode roll obtained as described above was used to produce a lithium ion secondary battery by the following procedure.

### <Production of slurry composition for negative electrode>

A slurry composition for a negative electrode was prepared by stirring 96 parts of graphite (average particle diameter: 15 µm) as a negative electrode active material, 2 parts of styrene-butadiene copolymer (BM-480B produced by ZEON CORPORATION; glass-transition temperature: -25°C) as organic particles B, 2 parts of a sodium salt of carboxymethyl cellulose (CMC-Na) as a thickener, and 120 parts of water as a solvent in a planetary mixer.

### <Production of negative electrode for lithium ion secondary battery>

Electrolytic copper foil (thickness: 15 µm; width: 200 mm) was prepared as a current collector. The slurry composition for a negative electrode was applied onto the electrolytic copper foil by a comma coater such as to have a coating weight of 20 mg/cm² after drying. The electrolytic copper foil was conveyed inside a 60°C oven for 2 minutes and inside a 120°C oven for 2 minutes at a speed of 0.5 m/min to dry the slurry composition for a negative electrode and form a film on the electrolytic copper foil. Next, a roll of the electrolytic copper foil with the film formed thereon was vacuum dried for 2 hours at a temperature of 165°C. Thereafter, cooling was performed slowly to a temperature of 25°C over 1 hour (cooling rate: 140°C/hr) to obtain a negative electrode web. The density of the negative electrode web prior to pressing was 1.0 g/cm³. The negative electrode web was rolled by roll pressing to produce a negative electrode including the electrolytic copper foil and a negative electrode mixed material layer having a density of 1.5 g/cm³. The thickness of the negative electrode mixed material layer was 70 µm.

### <Production of lithium ion secondary battery>

The post-pressing negative electrode was cut out as 5.0 cm × 5.0 cm. A separator that had been cut out to 5.2 cm × 5.5 cm was positioned on the negative electrode mixed material layer of the cut-out negative electrode. The positive electrode roll produced as described above was cut out as 4.8 cm × 4.8 cm to obtain a positive electrode. The obtained positive electrode was positioned at the opposite side of the separator to the negative electrode such that the surface of the functional layer formed on the positive electrode mixed material layer faced toward the separator. The laminate was enclosed in an aluminum packing case serving as a battery case, and then electrolyte solution (solvent: ethylene carbonate (EC)/diethyl carbonate (DEC)/vinylene carbonate (VC) = 68.5/30/1.5 (volume ratio); electrolyte: LiPF₆ of 1 M in concentration) was injected such that no air remained. The aluminum packing case was closed by heat sealing at 150°C to seal an opening of the aluminum packing case. High-temperature cycle characteristics and low-temperature output characteristics of a lithium ion secondary battery obtained in this manner were evaluated by the previously described methods. The results are shown in Table 1.

### (Comparative Example 1)

In production of a negative electrode as a component for an electrochemical device, an electrode mixed material layer was directly formed from composite particles as described below without producing a laminate for an electrochemical device. The obtained negative electrode was used to produce a lithium ion secondary battery in the same way as in Example 1. Moreover, the obtained negative electrode was used to evaluate edge strength of the electrode mixed material layer by the previously described method, and the obtained lithium ion secondary battery was used to evaluate high-temperature cycle characteristics and low-temperature output characteristics by the previously described methods. The results are shown in Table 1.

### <Production of negative electrode>

Composite particles for a negative electrode prepared in the same way as in Example 1 were supplied onto a substrate for an electrochemical device including a conductive adhesive layer that was formed in the same way as in Example 1 such that the composite particles for a negative electrode had a basis weight of 10 mg/cm². Next, a roller squeegee was applied, leveling was performed, and then the composite particles for a negative electrode were pressed to form a negative electrode mixed material layer having a density of 1.5 g/cm³. The obtained negative electrode was a negative electrode in which a conductive adhesive layer and a negative electrode mixed material layer were stacked in this order on electrolytic copper foil serving as a substrate.

In Table 1, shown below:
"PET" indicates polyethylene terephthalate;
"Tg" indicates glass-transition temperature;
"SBR" indicates styrene-butadiene copolymer;
"LCO" indicates lithium cobalt oxide; and
"PVdF" indicates polyvinylidene fluoride.

**Table 1**

| | | | | Example 1 | Example 2 | Example 3 | Example 4 | Example 5 | Example 6 | Comparative Example 1 |
|---|---|---|---|---|---|---|---|---|---|---|
| Type of component for electrochemical device | | | | Negative electrode | Negative electrode | Negative electrode | Negative electrode | Negative electrode | Positive electrode | Negative electrode |
| Type of production method | | | | Partial transfer | Partial transfer | Partial transfer | Partial transfer | Partial transfer | Partial transfer | Direct powder forming |
| Laminate for electrochemical device | Support | Type | | PET | PET | PET | PET | PET | PET | - |
| | | Thickness (µm) | | 25 | 25 | 25 | 25 | 25 | 25 | - |
| | Functional layer | Thickness (µm) | | 2 | 2 | 2 | 2.8 | 1.6 | 2 | - |
| | | Non-conductive particles | Type | Alumina | - | Alumina | Alumina | Alumina | Alumina | - |
| | | | Amount (mass%; based on organic particles A) | 20 | - | 20 | 20 | 20 | 20 | - |
| | | Organic particles A | Core portion Tg (°C) | 40 | 40 | 60 | 40 | 40 | 40 | - |
| | | | Shell portion Tg (°C) | 105 | 105 | 105 | 105 | 105 | 105 | - |
| | | | Volume-average particle diameter D50 (nm) | 500 | 500 | 500 | 500 | 500 | 500 | - |
| | Electrode mixed material layer | Electrode active material | Type | Graphite | Graphite | Graphite | Graphite | Graphite | LCO | Graphite |
| | | Organic particles B | Type | SBR | SBR | SBR | SBR | SBR | PVdF | SBR |
| | | | Tg (°C) | -25 | -25 | -25 | -25 | -25 | -35 | -25 |
| | Conductive adhesive layer | Thickness (µm) | | 2 | 2 | 2 | 2 | 2 | 2 | 2 |
| | Rate of change of density (%) | | | 15 | 15 | 15 | 15 | 15 | 15 | - |
| Evaluation | High-temperature cycle characteristics | | | A | A | B | A | B | A | C |
| | Low-temperature output characteristics | | | A | B | B | B | A | A | A |
| | Mixed material layer edge strength | | | A | A | A | A | A | A | D |

It can be seen from Table 1 that the electrochemical device components of Examples 1 to 6, which were each obtained by a production method accompanied by partial electrode mixed material layer transfer, had excellent edge strength, and that the lithium ion secondary batteries of Examples 1 to 6, which were electrochemical devices including these electrochemical device components, could display excellent high-temperature cycle characteristics.

On the other hand, it can be seen that the electrode mixed material layer of Comparative Example 1, which was formed using composite particles without performing partial electrode mixed material layer transfer, had poor edge strength, and that the lithium ion secondary battery of Comparative Example 1, which included this electrode mixed material layer, had poor high-temperature cycle characteristics.

### INDUSTRIAL APPLICABILITY

According to the present disclosure, it is possible to provide a method of producing a component for an electrochemical device that can provide a component for an electrochemical device having high strength at edges thereof.

Moreover, according to the present disclosure, it is possible to provide a laminate for an electrochemical device that is suitable for this method of producing a component for an electrochemical device.

## Claims

1. A method of producing a component for an electrochemical device using a laminate for an electrochemical device that includes an electrode mixed material layer and a support, comprising:
an adhering step of positioning a substrate for an electrochemical device that includes a conductive adhesive layer at a surface thereof and the laminate for an electrochemical device such that a surface of the conductive adhesive layer and a surface of the electrode mixed material layer are adjacent to one another, and adhering part of the electrode mixed material layer to the conductive adhesive layer to obtain a preliminary component; and
a peeling step of peeling, from the preliminary component, the support and another part of the electrode mixed material layer that is a part that is not adhered to the conductive adhesive layer, wherein
the conductive adhesive layer has a smaller surface area than the electrode mixed material layer, and at least part of a peripheral section of the electrode mixed material layer is the other part of the electrode mixed layer that is not adhered to the conductive adhesive layer.

2. A laminate for an electrochemical device comprising a functional layer and an electrode mixed material layer, in stated order, on a surface of a support.

3. The laminate for an electrochemical device according to claim 2, wherein the functional layer has a thickness of not less than 1.5 µm and not more than 3 µm.

4. The laminate for an electrochemical device according to claim 2 or 3, wherein the functional layer contains non-conductive particles.

5. The laminate for an electrochemical device according to any one of claims 2 to 4, wherein
the functional layer contains organic particles A, and
the organic particles A have a glass-transition temperature of 20°C or higher.

6. The laminate for an electrochemical device according to any one of claims 2 to 5, wherein
the electrode mixed material layer contains organic particles B, and
the organic particles B have a glass-transition temperature of 30°C or lower.

7. The method of producing a component for an electrochemical device according to claim 1, wherein the laminate for an electrochemical device is the laminate for an electrochemical device according to any one of claims 2 to 6.

8. The method of producing a component for an electrochemical device according to claim 1 or 7, wherein a rate of change of density of the electrode mixed material layer when comparing before the adhering step and after the adhering step is not less than 5% and not more than 20%.
